# EUROPEAN PATENT SPECIFICATION

(11) **EP 1 278 328 B1**
(45) Date of publication and mention of the grant of the patent: **08.12.2004**
(21) Application number: 02010768.6
(22) Date of filing: 14.05.2002
(51) Int. Cl.: H04L 5/14, H04L 27/26

(54) **Modem with gain control apparatus**
Modem mit Gerät zur automatischen Verstärkungsregelung
Modem avec dispositif de commande de gain

(30) Priority: 21.06.2001 JP 2001188227
(43) Date of publication of application: 22.01.2003
(73) Proprietor: Panasonic Communications Co., Ltd., Fukuoka-shi, Fukuoka 812-8531 (JP)
(72) Inventor: Tomita, Keiichi, Yokohama-shi, Kanagawa 222-0032 (JP); Noma, Nobuhiko, Yokohama-shi, Kanagawa 227-0033 (JP); Imai, Tatsuo, Chigasaki-shi, Kanagawa 253-0005 (JP)
(74) Representative: Grünecker, Kinkeldey, Stockmair & Schwanhäusser Anwaltssozietät

(56) References cited:
- WO-A-01/39384
- US-A- 6 044 107
- US-B1- 6 219 378

## Description

### BACKGROUND OF THE INVENTION

### Field of the Invention

This invention relates to a gain control apparatus that performs a gain control of signal energy attached to each carrier, in communication using multi-carrier method, and a modem apparatus that is provided with the gain control apparatus.

### Description of Related Art

For communication using xDSL modems including ADSL, communication is performed by adhering to ITU-T standards. Using an ADSL modem, for example, communication is performed by adhering to ITU-T standards, such as G. 992. 1 (G. DMT) and G. 992. 2 (G. Lite). In these standards, DMT (Discrete Multi Tone) method is used for modulating/demodulating by ADSL modems. DMT method is a multi-carrier modulating/demodulating method that employs multiple carriers (sub carriers) with different frequencies.

Signals in communication using xDSL modems can be degraded because of factors such as line conditions . Due to such degradation of signals, signals are undetectable at the receiver side. Therefore, a gain control is used for the degradation of signals, to amplify signal energy.

However, a conventional gain control used in single-carrier communication cannot be applied to an ADSL modem that employs multi-carrier method.

In other words, in single-carrier communication, a gain control is performed by controlling the signal energy of a single carrier so that it will not be amplified to exceed an upper limit of the gain, thereby preventing a overflow. However, for an ADSL modem that handles multi-carrier communication, even if a gain control is performed for one carrier so that its signal energy will not overflow, signal energy of other carriers can overflow. Thus, an appropriate gain control has not been available.

WO 0139384 describes an arrangement in which a programmable high pass filter is connected to a transmission line of a DSL system. The signal is then routed through a programmable gain control unit and an A/D converter into a digital signal processor, which in tum feeds back into the programmable high pass filter. Thus, the filter is programmed to make the signal levels of the highest and the lowest tones equal.

In US 6,219,378 a method for initializing an asymmetric subscriber line modem communication using discrete multi-tone technology is disclosed. An analog filter is used for separating upstream communication echoes from downstream data. As this increases the duration of impulse response over the channel, it requires time domain equalization so that intersymbol interference is eliminated. Transceiver training processes are carried out to establish the time domain equalization coefficients in an optimal manner.

US 6,044,107 describes a method for MDSL modem operation in which the available band width for the modem is divided into subsets, of which one is used as a communication path. The SNR value is reduced, any received data undersampled, and the received data is fast Fourier transformed to recover the transmitted data.

### SUMMARY OF THE INVENTION

The present invention is provided in view of above-described problems. The object of the invention is to provide a gain control apparatus that can appropriately perform a gain control of signal energy in multi-carrier communication, and a modem apparatus that is provided with the gain control apparatus.

In this invention, a maximum carrier energy amount is searched for, among energy amounts of multiple carriers comprising RE VERB signals adhering to G. 992. 1 (G. DMT) or G. 992. 2 (G. Lite) of ITU-T standards. A gain control is performed to bring the energy amount to a target energy level, and at the same time, the same gain control for the carrier with the maximum energy amount is also performed for other carrier energy amounts across the board.

Accordingly, it is possible to perform a gain control in case of signal degradation due to factors such as line conditions, and to securely prevent overflows of any carriers. Therefore, it is possible to perform an appropriate gain control that prevents overflows in multi-carrier communication.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 is a block diagram illustrating a configuration of a gain control apparatus according to an embodiment of the present invention;
Fig. 2 is an initial sequence timing chart based on G. 992. 1 of the ITU-T standard;
Fig. 3 illustrates frequency characteristics of the REVERB signals base on G. 992. 1;
Fig. 4 illustrates frequency characteristics when each carrier energy amount with REVERB signals decreases;
Fig. 5 is a flowchart illustrating a gain control by the gain control apparatus according to the embodiment of the present invention;
Fig. 6 (a) is an image when coordinate information (R, I) according to 250 sampling data is stored in a buffer of the gain control apparatus according to the embodiment of the present invention;
Fig. 6 (b) is an image for a process to search for a maximum carrier energy amount according to the (R, I) coordination of each sampling data, performed by a maximum amount searcher of the gain control apparatus, according to the embodiment of the present invention;
Fig. 7 is a block diagram illustrating a configuration of integration filter of the gain control apparatus according to the embodiment of the present invention; and
Fig. 8 illustrates a situational example when an ADSL modem that is provided with the gain control apparatus is applied, according to the embodiment of the present invention.

### DETAILED DESCRIPTION OF PREFERRED EMBODIMENTS

The embodiment of the present invention is explained in the following, in reference to the above-described drawings.

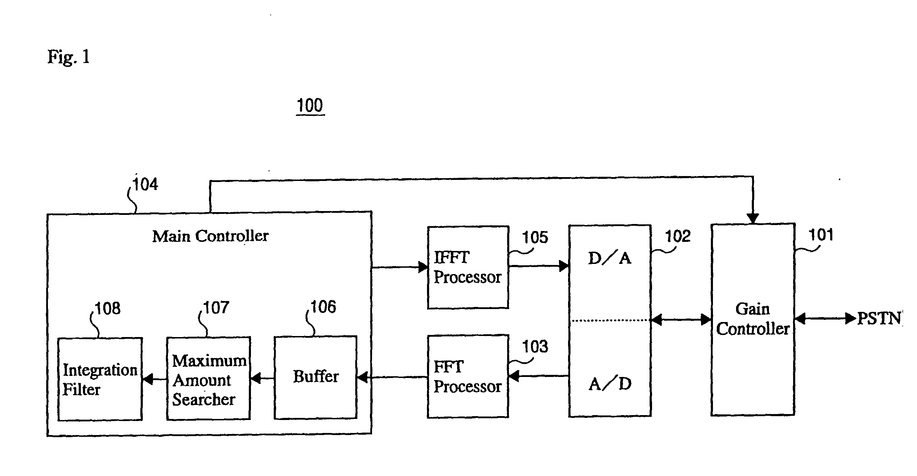

Fig. 1 is a block diagram illustrating a configuration of a gain control apparatus according to the embodiment of the present invention.

In Fig. 1, a gain controller 101 functions as an adjustor for signal energy that is given to each carrier of multi carriers. Specifically, the gain controller 101 performs a gain control for signal energy that is input from a public line (PSTN), via an interface, or output to the PSTN. The gain control by the gain controller 101 is performed according to a gain control amount given by a main controller (later described).

For the gain control apparatus 100, the object is to perform a gain control especially for signal energy that is input from the PSTN, and to appropriately handle input signals. Therefore, the gain controller 101 performs a special gain control upon a signal input. When outputting a signal toward the PSTN, on the other hand, the gain controller 101 performs a general process, e.g., a process for raising energy amount of output signal energy to a predetermined level.

An A/D (D/A) converter 102 performs a digital/analog conversion process (D/A conversion process) of an output signal toward the PSTN, and performs an analog/digital conversion process (A/D conversion process ) for an input signal from the PSTN.

The signal after the A/D conversion process by the A/D (D/A) converter 102 is further processed for a Fourier transformation process by the FFT (Fast Fourier Transform) processor 103, and is output to the main controller 104.

An IFFT (Inverse Fast Fourier Transform) processor 105 performs a reverse Fourier transformation process toward the signal that is delivered from the main controller 104, and outputs the signal to the A/D (D/A) converter 102.

The main controller 104 functions as a controller that calculates a gain control amount at the gain controller 101, based on the output from the FFT processor 103 (FFT output).

Specifically, the main controller 104 includes a buffer 106 that stores FFT output, a maximum amount searcher 107 that searches for a maximum amount from the FFT output stored in the buffer 106, and a integration filer 108 that performs a predetermined integral calculation for the maximum amount found by the maximum amount searcher 107, and calculates a gain control amount at the gain controller 101. Details for the calculation of the gain control amount is later described.

The gain control apparatus 100 performs a gain control using the frequency characteristics of the REVERB signals communicated at G. 992. 1 (G. DMT) and G. 992. 2 (G. Lite), which adhere to ITU-T standards.

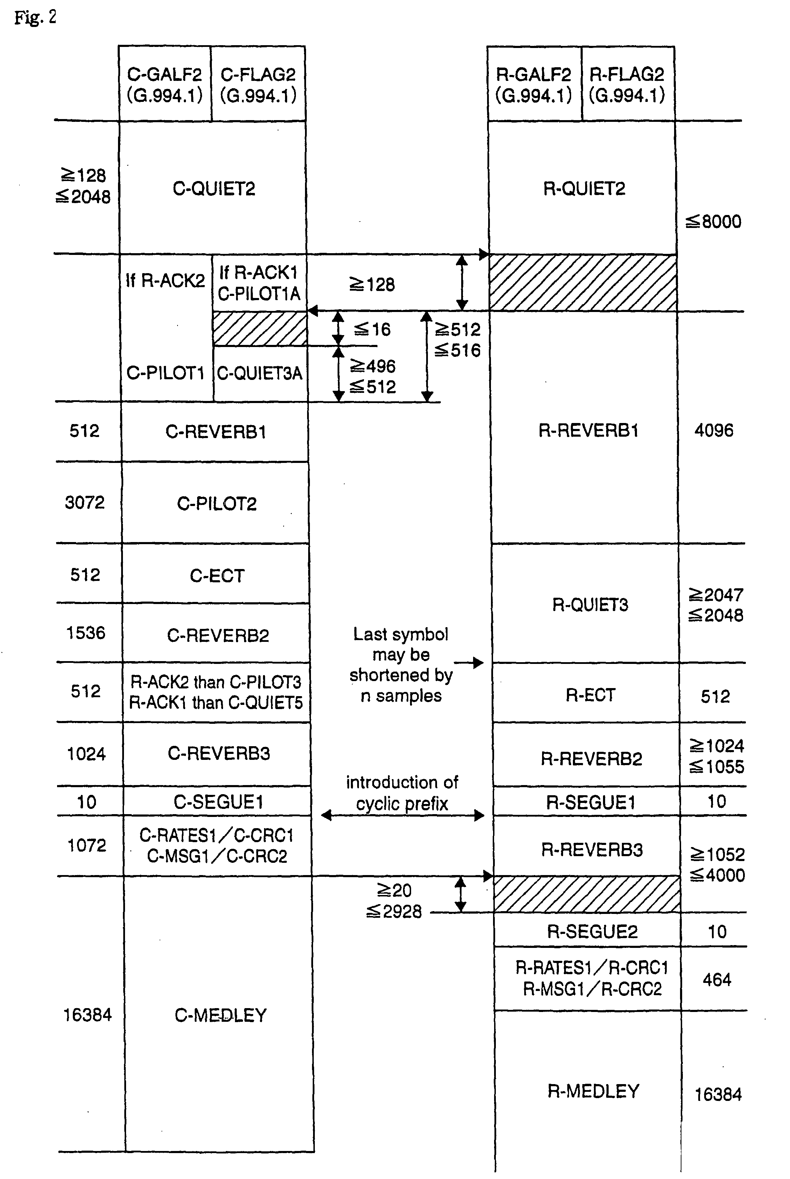

The REVERB signals are used in various situations of standards, such as G. 992. 1. Fig. 2 is an initial sequence-timing chart based on G. 992. 1. In Fig. 2, an ADSL modem of the transmitting side (transmitting station) is on the left, and an ADSL modem of the receiving side (receiving station) is on the right. As shown in Fig. 2, the REVERB signals are transmitted three times (C, R-REVERB1-3) between the transmitting and receiving stations in the initial sequence.

In the G. 992. 1 standard, after transmitting the third REVERB signal (C-REVERB3), the transmitting station transmits a SEGUE signal (C-SEGUE1), which indicates that data will follow. The transmitting station, then, transmits C-RATES1 that sets the transmission speed, and C-MSG1 that sets additive information, such as a noise margin. Further, the transmitting station transmits C-MEDLEY that sets transmission speed and data bit numbers, which are attached to each carrier of multi carriers.

Likewise, immediately after the third REVERB signal, transmission of important control signals is performed in the succeeding communication. Therefore, to perform a gain control, it is preferable to complete the gain control before the third REVERB signal. Thus, the gain control apparatus 100 performs a gain control upon receiving the earlier REVERB signals (C-REVERB1, 2), especially the first REVERB signal (C-REVERB1). Accordingly, it is possible to perform a gain control even for REVERB signals appearing after the first REVERB signal (C-REVERB1), which is transmitted/received in the beginning.

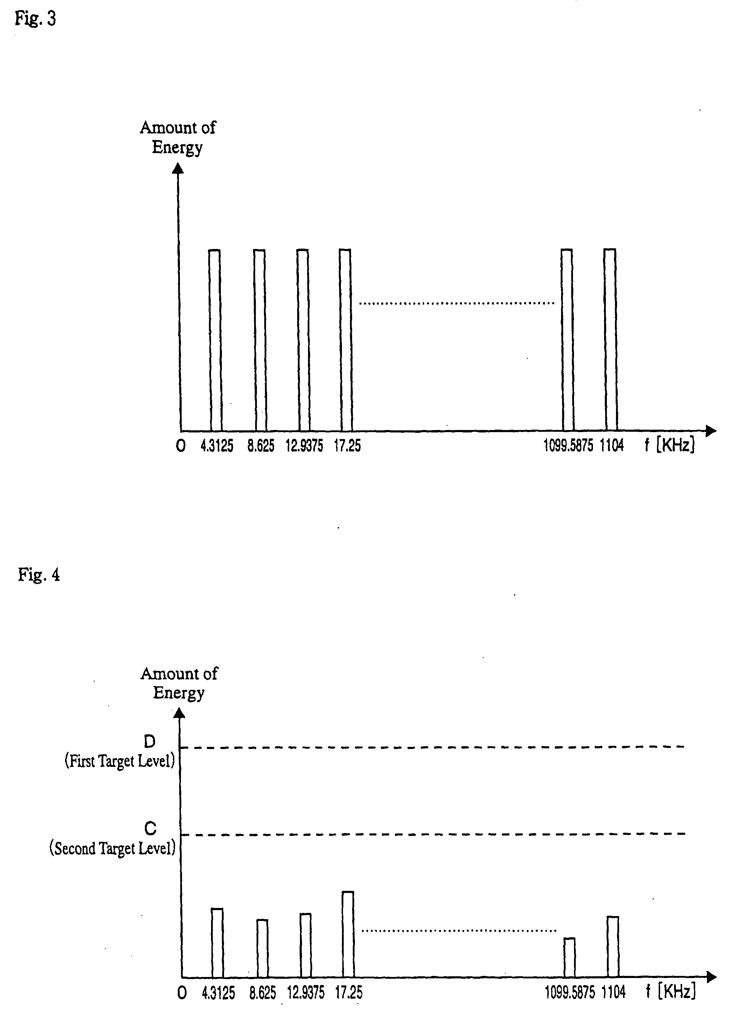

Frequency characteristics of the REVERB signals are explained hereafter. Fig. 3 illustrates frequency characteristics of the REVERB signals. In Fig. 3, lateral axis is frequency (f/kHz) and vertical axis is amount of energy (G/db). Fig. 3 illustrates frequency characteristics when REVERB signals are detected by a detector, such as a spectrum analyzer.

As shown in Fig. 3, each REVERB signal has frequency characteristics with signal energy of the same energy amount, in multiple carriers that are arranged from 1,1104 kHz to 4.3125 kHz period. The carriers are arranged at 4.3125 kHz periods; therefore, the REVERB signals have frequency characteristics that resemble teeth of a comb, as shown in the Fig. 3. The REVERB signals are only comprised of signal energy, and are not attached by data.

The REVERB signals are designed to have such frequency characteristics as shown in Fig. 3, however, in real communication, the energy amounts of the signal energy that is attached to each carrier (carrier energy amounts) could decrease because of line conditions. Fig. 4 illustrates an example of frequency characteristics of REVERB signals when each carrier energy amount decreases. In Fig. 4, the carrier energy amount of 17.25 kHz shows the maximum amount, however, this energy amount is also much lower than the target minimum energy amount (second target level), which is described later.

When the energy amount of each carrier decreases, much lower than the second target level, it is difficult to normally recognize control signals from the transmitting station, even for the following communication, and to normally perform the communication itself. To avoid such problems, the gain control apparatus 100 uses the frequency characteristics of the REVERB signals, and performs appropriate gain controls in multi-carrier communication.

Specifically, the gain control apparatus 100 searches for the maximum carrier energy amount, among energy amounts of multiple carriers comprising REVERB signals, performs a gain control to bring the energy amount to the target energy level, and further performs the same gain control of the maximum carrier energy amount, for other carrier energy amounts across the board. Therefore, it is possible to perform a gain control without overflows, even in multi-carrier communication.

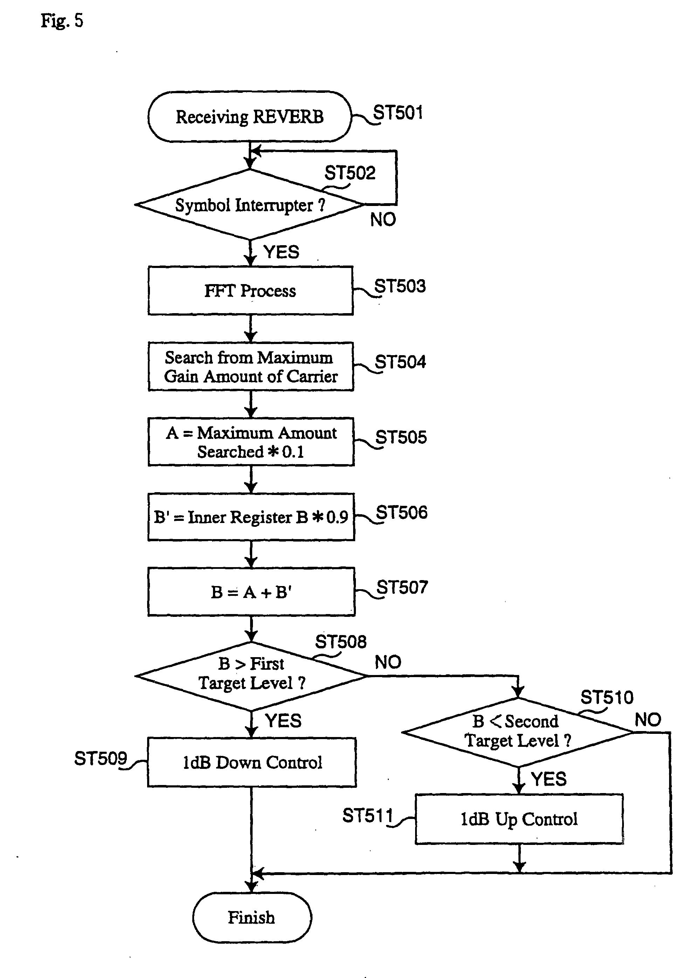

Using Fig. 5, a flow for the gain control apparatus 100 to perform a gain control is illustrated hereafter. Fig. 5 is a flowchart illustrating a gain control by the gain control apparatus 100.

Also, the gain control apparatus 100 always monitors the REVERB signal reception, when it is idle . Fig. 5 shows a flow after confirming the REVERB signal reception, in such a monitoring operation. The REVERB signal reception is confirmed upon detecting an FFT output for receiving a REVERB signal that has the above-described frequency characteristics. That is, the REVERB signal reception is confirmed upon detecting a signal that has the frequency characteristics as shown in Fig. 3.

Upon confirming the reception of a REVERB signal (ST 501), the gain control apparatus 100 waits for a symbol interruption when receiving a REVERB signal (ST 502). When confirming the reception of a REVERB signal, at the gain control apparatus 100, the process of the flow shown in Fig. 5 is repeated.

In the gain control apparatus 100, a symbol interruption is performed approximately every 250. second. Sampling data of input signals, on the other hand, is obtained approximately every 1. second. Each time, an A/D conversion process is performed at the A/D (D/A) converter 102, and data is output to the FFT processor 103. When there is a symbol interruption, an FFT process is performed for this sampling data at the FFT processor 103 (ST 503). Specifically, when sampling data is accumulated for one symbol, an FFT process is performed each time.

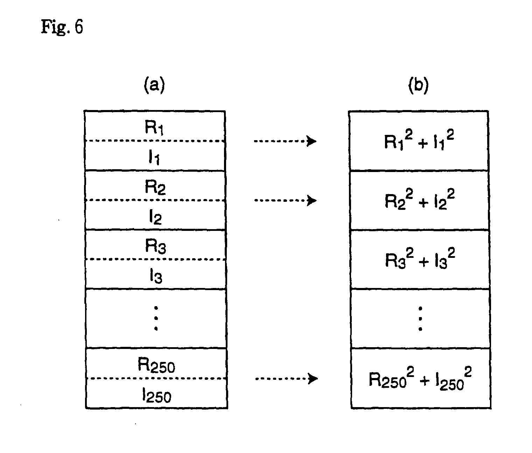

After the FFT process, each sampling data is shown as a coordinate plot on a surface of R-I (Real-Imaginary). Then the coordinate information (R, I) according to each sampling data is stored in the buffer 106. In other words, for each FFT process, the coordinate information (R, I) associated with 250 sampling data is stored. Fig. 6 (a) is an image when coordinate information (R, I) according to 250 sampling data is stored in the buffer 106.

When the coordinate information (R, I), according to the sampling data of one symbol, is stored in the buffer 106, the maximum amount searcher 107 searches for the maximum carrier energy amount, among energy amounts of multiple carriers that are comprising the REVERB signals, based on the coordinate information (R, I) (ST 504). The distance of the (R, I) coordinate plot of each sampling data, shown in the R-I surface, from the origin point, amounts to the energy amount of each carrier. Therefore, the maximum amount searcher 107 searches for the maximum carrier energy amount by comparing the distances of the (R, I) coordinate plot of each sampling data from the origin point.

More specifically, maximum carrier energy amount is searched for, by comparing the sum of the squares of each R and I value, on the coordinate plots of each sampling data, which is stored in the 106. Fig. 6 (b) is an image for a process to search for a maximum carrier amount according to the (R, I) coordination of each sampling data, performed by the maximum amount searcher 107. Using the example of Fig. 4, 17.25 kHz is found as a maximum carrier energy amount.

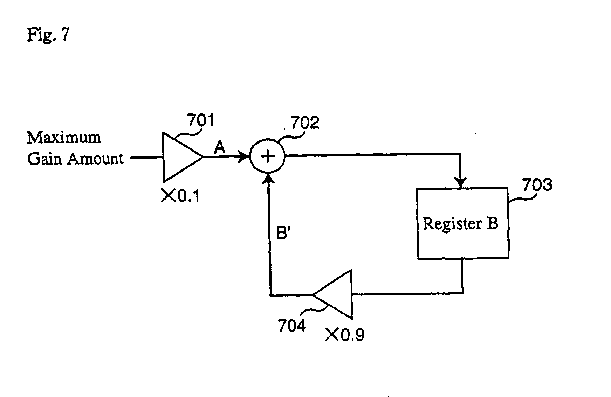

The integration filer 108 performs a predetermined integral calculation for the maximum carrier energy amount, which is found by the maximum amount searcher maximum value searcher 107 (ST 505). Fig. 7 is a block diagram illustrating a configuration of the integration filter 108.

The integration filer 108 outputs value A, to an adder 702, after the maximum carrier energy amount found by the maximum amount searcher 107 is multiplied by 0.1 in a multiplier 701 (ST 505). Also, the integration filer 108 outputs value B' to the adder 702, after value B stored in an inner register 703 is multiplied by 0.9 in a multiplier 704 (ST 506). Further, the integration filer 108 outputs, to the inner register 703, a sum B (summed by the adder 702) of value A (the input from the multiplier 701); and value B' (the input from the multiplier 704) (ST 507). This value B is stored in the inner register 703.

Accordingly, by performing the predetermined integral calculation for the maximum carrier energy amount, which is found by the maximum amount searcher 107, it is possible to prevent a large fluctuation of value B by the lower energy amount, even when the maximum carrier energy amount found afterward is decreased suddenly.

When the predetermined integral calculation for the maximum carrier energy amount is completed, the main controller 104 compares value B that is obtained from the integral calculation with the target maximum energy amount (the first target level) and the second target level.

First, the main controller 104 checks whether value B is greater than the first target amount (ST 508). If value B is greater than the first target amount, the main controller 104 controls to decrease the carrier energy amount.

Specifically, the main controller 104 controls the gain controller 101 to decrease the energy amount of the input signal by 1db (ST 509). According to the control, the gain controller 101 decreases the energy amount of the input signal by 1db. Then the main controller 104 completes the gain control by the current symbol interruption.

Accordingly, the gain controller 101 decreases all of the carrier energy amounts, which will be input later, by 1db across the board. Therefore, it is possible to control carrier energy amounts for all the input signals, based on the maximum carrier energy amount that is found by the maximum amount searcher 107.

As described above, when confirming the reception of the REVERB signals, the gain control process of the same flow is repeated. Therefore, when value B is much greater than the first target level, all of the carrier energy amounts of input signals are gradually decreased, so that they are eventually decreased to appropriate amounts that are smaller than the first target level.

When value B is not greater than the first target level, the main controller 104 checks whether value B is smaller than the second target level (ST 510). When value B is smaller than the second target level, the main controller 104 controls to increase the carrier energy amount.

Specifically, the main controller 104 controls the gain controller 101 to increase the energy amount of the input signal by 1db (ST 511). According to the control, the gain controller 101 increases the energy amount of the input signals by 1db. Then, the main controller 104 completes the gain control by the current symbol interruption.

Similar to the decreasing control of the energy amount, the gain controller 101 increases all of the carrier energy amounts across the board, which will be input later, by 1db. Therefore, it is possible to control carrier energy amounts for all the input signals, based on the maximum carrier energy amount that is found by the maximum amount searcher 107.

Also, similar to the decreasing control of the energy amount, when confirming the reception of the REVERB signals, the gain control process of the same flow is repeated. Therefore, when value B is much lower than the second target level, all of the carrier energy amounts of input signals are gradually increased, so that they are eventually increased to appropriate amounts that are greater than the second target level.

Further, at Step 510, when value B is greater than the second target level, the main controller 104 determines that the gain control is not necessary, and terminates the process.

Accordingly, by having a range of target energy level, it is possible to avoid performing a gain control for the maximum energy amount, which is already within the target range. Therefore, it is possible to prevent a complicated process at the apparatus by performing a gain control even for the energy amount that does not need a gain control.

The process of Steps 508 - 511 is explained in reference to Fig. 4. In the embodiment of the present invention, as shown in Fig. 4, the energy amount for the first target level is "C" and the energy amount of the second target level is "D". At Step 504, as described above, a carrier energy amount of 17.25 kHz is found as the maximum carrier energy amount. The integral calculation is applied to this maximum amount, and value B is calculated.

Step 508 checks whether the carrier energy amount, 17.25 kHz, is greater than "C", which is the first target level. As shown in the Fig. 4, the carrier energy amount, 17.25 kHz is smaller than the first target level "C"; therefore, Step 510 checks whether the energy amount is smaller than the second target level "D". As shown in Fig. 4, the carrier energy amount, 17.25 kHz is smaller than the second target level "D". Thus, at Step 511, the main controller 104 controls the gain controller 101 to increase the carrier energy amount of the input signal, by 1db. Under this control, the gain controller 101 increases all of the carrier energy amounts of the input signal by 1db across the board. When confirming the reception of the REVERB signals, the process of the flow is repeated to increase the energy amount, until the carrier energy amount, 17.25 kHz, becomes greater than the second target level "D".

According to the gain control apparatus 100 of the present invention, maximum carrier energy amount is searched for among the energy amounts of multiple carriers that comprise REVERB signals, and a gain control is performed to bring the energy amount to a target energy level. At the same time, the same gain control for the maximum energy amount is performed for other carrier energy amounts across the board. Accordingly, it is possible to perform a gain control for signal degradation caused by line conditions and to prevent overflows of any other carriers at the same time. Therefore, it is possible to perform an appropriate gain control that prevents overflows in multi-carrier communication.

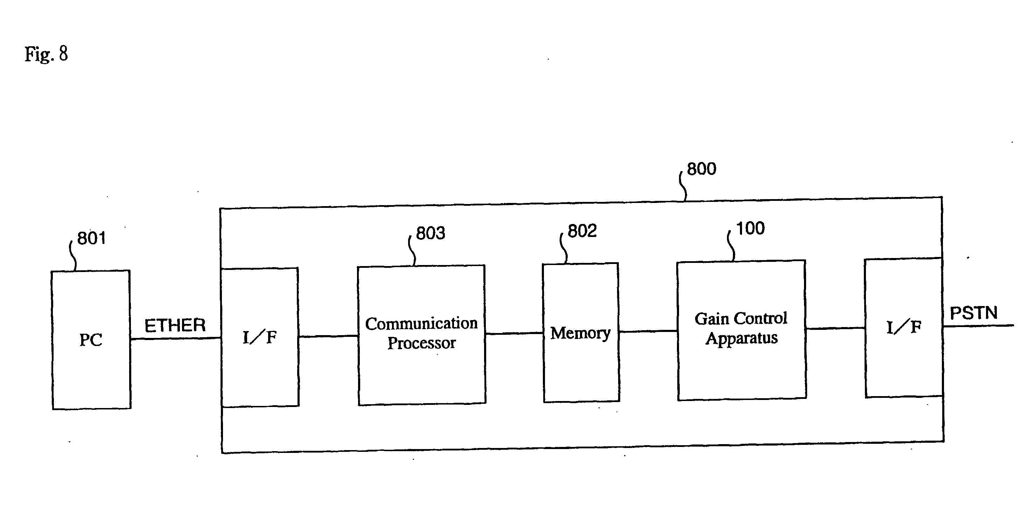

Fig. 8 illustrates a situational example when an ADSL modem 800 that is provided with the gain control apparatus 100, is applied.

As shown in Fig. 8, the ADSL modem 800 that is provided with the gain control apparatus 100, is connected to, for example, a data communication apparatus 801, such as a PC, via a network, such as the Ethernet ®, at one end, known as the terminal interface, and to the PSTN at the other end, known as the line interface.

The gain control apparatus 100 of the present invention performs a gain control for the signals that are input via the PSTN, as described above. The signals after the gain control process that is performed by the gain control apparatus 100 are stored in a memory 802.

The communication processor 803 retrieves the signals after the gain control, which are stored in the memory 802, controls the communication with an ADSL modem at the other side, and performs a necessary communication process with the data communication apparatus 801 that is connected via the Ethernet ®.

Then, the communication processor 803 is able to perform the process in accordance with the signals after the gain control, which is stored in the memory 802. Therefore, it is possible to securely prevent communication errors due to the signal degradation caused by line conditions.

The present invention is not limited to the above-described embodiments, and various variations and modifications may be possible without departing from the scope of the present invention.

## Claims

1. A modem apparatus for controlling a communication performed with a plurality of carriers constituting a reception analog signal, each carrier having a different frequency respectively, the modem apparatus comprising:
a gain controller (101) that performs a gain control on the reception analog signal received from a telephone line before the reception analog signal is input to an A/D converter (102); and
said A/D converter (102) that samples the reception analog signal received from a telephone line to output sample data;
**characterised by**
an FFT section (103) that performs a fast Fourier transformation process on said sample data per symbol unit, to obtain an output indicating an energy amount of each carrier by analysing real and imaginary parts of the fast Fourier transformation signal;
a maximum amount detector (107) that detects a maximum energy amount among the said output;
a main controller (104) that controls said gain controller (101) so that the energy amounts of all the carriers of said reception analog signal increase when said maximum energy amount detected by said maximum amount detector (107) is lower than a target amount, and controls said gain controller (101) so that the energy amounts of all the carriers of said reception analog signal decrease when said maximum energy amount detected by said maximum amount detector (107) is higher than said target amount;
an IFFT section (105) that performs an inverse fast Fourier transformation on transmission data to modulate the transmission data;
a D/A converter (102) that converts the modulated transmission data into transmission analog signal.

2. The modem apparatus according to claim 1,
**characterised in that**
the modem apparatus is adapted to operate in accordance with at least G.992.1 which corresponds to a full-rate ADSL standard, and G.992.2 which corresponds to a half-rate ADSL standard,
wherein said main controller (104) is adapted to perform the gain control on said reception analog signal and to complete the adjustment of the gain control amount of said gain controller during the time taken for reception of a REVERB signal provided by the ADSL standard.

3. The modem apparatus according to claim 1 or 2,
**characterised in that**
the modem apparatus is adapted to operate in accordance with at least G.992.1 which correspond to a full-rate ADSL standard, and G.992.2 which corresponds to a half-rate ADSL standard,
wherein said main controller (104) is adapted to perform the gain control on the reception analog signal and to complete the adjustment of the gain control amount of said gain controller during the time taken for reception of a first REVERB signal in an initial sequence provided by the ADSL standard.

4. The modem apparatus according to any of claims 1 to 3,
**characterised in that**
wherein said target amount comprises a range from a minimum value (C) to a maximum value (D), said main controller (104) does not control said gain controller (101) to increase or decrease the energy amounts when the detected maximum energy amount is within the range.

5. A modem apparatus according to claim 1, further comprising:
a terminal interface connected to a user terminal;
a line interface connected to a telephone line;
a communication processor (803) that decodes demodulation data, performs the multi-carrier demodulation by said gain control apparatus (100) to output to said terminal interface, and encodes the transmission data to output to said gain controller (101); wherein said modem apparatus is suitable to carry out ADSL communications.

6. A gain control apparatus (100) for performing a gain control of a reception analog signal with a plurality of carriers, each carrier has a different frequency respectively, the gain control apparatus (100) comprising:
a buffer (106) that stores a fast Fourier transformation output, the fast Fourier transformation output being obtained by fast Fourier transformation means, performing the fast Fourier transformation on a sample data per symbol unit, the sample data being obtained by sampling a reception analog signal;
a maximum amount detector (107) that detects a maximum energy amount among the fast Fourier transformation output stored in said buffer;
a main controller (104) that increases the energy amounts of all the carriers of said reception analog signal when said maximum energy amount detected by said maximum amount detector (107) is lower than a target amount, and decreases the energy amounts of all the carriers of said reception analog signal when said maximum energy amount detected by said maximum amount detector (107) is higher than said target amount.

7. A communication control method that performs communication utilizing a plurality of carriers constituting a reception analog signal, each carrier having a different frequency respectively, the communication control method comprising:
performing a gain control on the reception analog signal;
sampling a reception analog signal received from a telephone line to output sample data;
**characterised by**
performing a fast Fourier transformation process on said sample data per symbol unit, to obtain an output indicating energy amount of each carrier by analysing real and imaginary parts of the fast Fourier transformation signal;
detecting a maximum energy amount among the said output;
controlling to increase the energy amounts of all the carriers of said reception analog signal when said detected maximum energy amount is lower than a target amount, and controlling to decrease said energy amounts of all the carriers of said reception analog signal when said detected maximum energy amount is higher than said target amount.

## Patentansprüche

1. Eine Modemvorrichtung zum Regeln einer Datenübertragung, durchgeführt mit einer Vielzahl von Trägern, die ein Empfangs-Analogsignal bilden, wobei jeder Träger jeweils eine andere Frequenz aufweist, wobei die Modemvorrichtung umfasst:
eine Verstärkungsregelungs-Vorrichtung (101), die eine Verstärkungsregelung an dem Empfangs-Analogsignal durchführt, das von einer Telefonleitung empfangen wird, bevor das Empfangs-Analogsignal in einen A/D-Wandler (102) eingegeben wird; und
den A/D-Wandler (102), der das Empfangs-Analogsignal abtastet, das von einer Telefonleitung empfangen wird, um Abtastdaten auszugeben;
**gekennzeichnet durch**
einen FFT-Bereich (103), der einen schnellen Fourier-Transformationsprozess an den Abtastdaten pro Symboleinheit durchführt, um eine Ausgabe zu erhalten, die einen Energiebetrag für jeden Träger angibt, indem reale und imaginäre Teile des schnellen Fourier-Transformationssignals analysiert werden;
eine Höchstbetrag-Erfassungsvorrichtung (107), die einen maximalen Energiebetrag aus der Ausgabe erfasst;
eine Haupt-Regelungsvorrichtung (104), welche die Verstärkungsregelungs-Vorrichtung (101) steuert, so dass sich die Energiebeträge aller der Träger des Empfangs-Analogsignals erhöhen, wenn der maximale Energiebetrag, der von der Höchstbetrag-Erfassungsvorrichtung (107) erfasst wird, niedriger ist als ein Sollbetrag, und die Verstärkungsregelungs-Vorrichtung (101) steuert, so dass sich die Energiebeträge aller der Träger des Empfangs-Analogsignals verringern, wenn der maximale Energiebetrag, der von der Höchstbetrag-Erfassungsvorrichtung (107) erfasst wird, höher ist als der Sollbetrag;
einen IFFT-Abschnitt (105), der eine inverse schnelle Fourier-Transformation an Übertragungsdaten durchführt, um die Übertragungsdaten zu modulieren;
einen D/A-Wandler (102), der die modulierten Übertragungsdaten in ein Übertragungs-Analogsignal umwandelt.

2. Modemvorrichtung nach Anspruch 1,
**dadurch gekennzeichnet, dass**
die Modemvorrichtung angepasst ist, um in Übereinstimmung mit wenigstens G.992.1, was einem ADSL-Standard mit voller Übertragungsgeschwindigkeit entspricht, und G.992.2, was einem ADSL-Standard mit halber Übertragungsgeschwindigkeit entspricht, betrieben zu werden,
wobei die Haupt-Regelungsvorrichtung (104) angepasst ist, um die Verstärkungsregelung an dem Empfangs-Analogsignal durchzuführen und um die Einstellung des Verstärkungsregelungs-Betrags der Verstärkungsregelungs-Vorrichtung während der Zeit abzuschließen, die für den Empfang eines REVERB-Signals gebraucht wird, das durch den ADSL-Standard bereitgestellt wird.

3. Modemvorrichtung nach Anspruch 1 oder 2,
**dadurch gekennzeichnet, dass**
die Modemvorrichtung angepasst ist, um in Übereinstimmung mit wenigstens G.992.1, was einem ADSL-Standard mit voller Übertragungsgeschwindigkeit entspricht, und G.992.2, was einem ADSL-Standard mit halber Übertragungsgeschwindigkeit entspricht, betrieben zu werden,
wobei die Haupt-Regelungsvorrichtung (104) angepasst ist, um die Verstärkungsregelung an dem Empfangs-Analogsignal durchzuführen und um die Einstellung des Verstärkungsregelungs-Betrags der Verstärkungsregelungs-Vorrichtung während der Zeit abzuschließen, die für den Empfang eines ersten REVERB-Signals in einer ursprünglichen Sequenz gebraucht wird, das durch den ADSL-Standard bereitgestellt wird.

4. Modemvorrichtung nach einem der Ansprüche 1 bis 3,
**dadurch gekennzeichnet, dass**
der Sollbetrag einen Bereich von einem Mindestwert (C) bis zu einem Höchstwert (D) umfasst, wobei die Haupt-Regelungsvorrichtung (104) die Verstärkungsregelungs-Vorrichtung (101) nicht steuert, um die Energiebeträge zu erhöhen oder zu verringern, wenn der erfasste maximale Energiebetrag innerhalb des Bereichs liegt.

5. Modemvorrichtung nach Anspruch 1, des Weiteren umfassend:
eine Endgerätschnittstelle, die an ein Benutzer-Endgerät angeschlossen ist;
eine Leitungsschnittstelle, die an eine Telefonleitung angeschlossen ist;
einen Datenübertragungsprozessor (803), der Demodulationsdaten decodiert, der die Mehrträger-Demodulation durch das Gerät zur Verstärkungsregelung (100) für die Ausgabe an die Endgerätschnittstelle durchführt, und die Übertragungsdaten für die Ausgabe an die Verstärkungsregelungs-Vorrichtung (101) codiert; wobei die Modemvorrichtung für die Ausführung einer ADSL-Datenübertragung geeignet ist.

6. Ein Gerät zur Verstärkungsregelung (100) zum Durchführen einer Verstärkungsregelung eines Empfangs-Analogsignals mit einer Vielzahl von Trägern, wobei jeder Träger jeweils eine andere Frequenz aufweist, wobei das Gerät zur Verstärkungsregelung (100) umfasst:
einen Puffer (106), der eine Ausgabe einer schnellen Fourier-Transformation speichert, wobei die Ausgabe der schnellen Fourier-Transformation durch Mittel zur schnellen Fourier-Transformation erhalten wird, welche die schnelle Fourier-Transformation an Abtastdaten pro Symboleinheit durchführen, wobei die Abtastdaten durch Abtasten eines Empfangs-Analogsignals erhalten werden;
eine Höchstbetrag-Erfassungsvorrichtung (107), die einen maximalen Energiebetrag aus der Ausgabe der schnellen Fourier-Transformation erfasst, die in dem Puffer gespeichert ist;
eine Haupt-Regelungsvorrichtung (104), welche die Energiebeträge aller der Träger des Empfangs-Analogsignals erhöht, wenn der maximale Energiebetrag, der von der Höchstbetrag-Erfassungsvorrichtung (107) erfasst wird, niedriger ist als ein Sollbetrag, und die Energiebeträge aller der Träger des Empfangs-Analogsignals verringert, wenn der maximale Energiebetrag, der von der Höchstbetrag-Erfassungsvorrichtung (107) erfasst wird, höher ist als der Sollbetrag.

7. Ein Verfahren zur Regelung von Datenübertragung, das eine Datenübertragung durchführt unter Verwendung einer Vielzahl von Trägern, die ein Empfangs-Analogsignal bilden, wobei jeder Träger jeweils eine andere Frequenz aufweist, wobei das Verfahren zur Regelung von Datenübertragung umfasst:
Durchführen einer Verstärkungsregelung an dem Empfangs-Analogsignal;
Abtasten eines Empfangs-Analogsignals, das von einer Telefonleitung empfangen wurde, um Abtastdaten auszugeben;
**gekennzeichnet durch**
Durchführen eines schnellen Fourier-Transformationsprozesses an den Abtastdaten pro Symboleinheit, um eine Ausgabe zu erhalten, die einen Energiebetrag für jeden Träger angibt, indem reale und imaginäre Teile des schnellen Fourier-Transformationssignals analysiert werden;
Erfassen eines maximalen Energiebetrags aus der Ausgabe;
Regeln, um die Energiebeträge aller der Träger des Empfangs-Analogsignals zu erhöhen, wenn der erfasste maximale Energiebetrag niedriger ist als ein Sollbetrag, und Regeln, um die Energiebeträge aller der Träger des Empfangs-Analogsignals zu erhöhen, wenn der erfasste maximale Energiebetrag höher ist als der Sollbetrag.

## Revendications

1. Dispositif de modem pour commander une communication réalisée avec une pluralité de porteuses qui constituent un signal analogique de réception, chaque porteuse ayant respectivement une fréquence différente, le dispositif de modem comprenant :
un contrôleur de gain (101) qui réalise une commande de gain sur le signal analogique de réception reçu d'une ligne téléphonique avant que le signal analogique de réception soit entré dans un convertisseur A/D (102) ; et
ledit convertisseur A/D (102) qui échantillonne le signal analogique de réception reçu d'une ligne téléphonique pour sortir une donnée échantillon ;
**caractérisé par**
une section FFT (103) qui réalise un processus de transformation rapide de Fourier sur ladite donnée d'échantillon par unité de symbole, pour obtenir une sortie indiquant une quantité d'énergie de chaque porteuse en analysant les parties réelles et imaginaires du signal de transformation rapide de Fourrier ;
un détecteur de quantité maximum (107) qui détecte une quantité maximum d'énergie parmi ladite sortie ;
un contrôleur principal (104) qui contrôle ledit contrôleur de gain (101) de telle façon que les quantités d'énergie de toutes les porteuses dudit signal analogique de réception augmente lorsque ladite quantité maximum d'énergie détectée par ledit détecteur de quantité maximum (107) est inférieure à une quantité cible, et commande ledit contrôleur de gain (101) de telle façon que les quantités d'énergie de toutes les porteuses dudit signal analogique de réception diminuent lorsque ladite quantité d'énergie maximum détectée par ledit détecteur de quantité maximum (107) est supérieure à ladite quantité cible ;
une section IFFT (105) qui réalise une transformation rapide de Fourier inverse sur les données de transmission pour moduler les données de transmission ;
un convertisseur D/A (102) qui convertit les données de transmission modulées en signal analogique de transmission.

2. Dispositif de modem selon la revendication 1,
**caractérisé en ce que**
le dispositif de modem est adapté pour fonctionner selon au moins la G.992.1 qui correspond à une norme ADSL à charge pleine, et G.992.2 qui correspond à une norme ADSL à moitié de charge,
dans lequel ledit contrôleur principal (104) est adapté pour réaliser la commande de gain sur ledit signal de réception analogique et le moyen de transformation rapide de Fourier réalise le réglage de la quantité de commande de gain dudit contrôleur de gain pendant le temps pris pour la réception d'un signal REVERB fourni par la norme ADSL.

3. Dispositif de modem selon la revendication 1 ou 2,
**caractérisé en ce que**
le dispositif de modem est adapté pour fonctionner selon au moins la G.992.1 qui correspond à une norme ADSL à charge pleine, et G.992.2 qui correspond à une norme ADSL à moitié de charge,
dans lequel ledit contrôleur principal (104) est adapté pour réaliser la commande de gain sur le signal de réception analogique et le moyen de transformation rapide de Fourier réalise le réglage de la quantité de commande de gain dudit contrôleur de gain pendant le temps pris pour la réception d'un premier signal REVERB dans une séquence initiale fournie par la norme ADSL.

4. Dispositif de modem selon la revendication 1 à 3,
**caractérisé en ce que**
dans lequel ladite quantité cible comprend une fourchette d'une valeur minimum (C) à une valeur maximum (D), ledit contrôleur principal (104) ne commande pas ledit contrôleur de gain (101) pour augmenter ou diminuer les quantités d'énergie lorsque la quantité maximum d'énergie est dans la fourchette.

5. Dispositif de modem selon la revendication 1, comprenant en outre :
une interface de terminal connectée à un terminal utilisateur ;
une interface de ligne connectée à une ligne téléphonique ;
un processeur de communication (803) qui décode les données de démodulation, réalise la démodulation à porteuses multiples au moyen dudit dispositif de commande de gain (100) pour sortir vers ladite interface de terminal, et code les données de transmission pour sortir vers ledit
contrôleur de gain (101) ; dans lequel ledit dispositif de modem est adapté pour transporter des communications ADSL.

6. Dispositif de commande de gain (100) pour réaliser une commande de gain d'un signal analogique de réception avec une pluralité de porteuses, chaque porteuse a respectivement une fréquence différente, le dispositif de commande de gain (100) comprenant :
un tampon (106) qui stocke une sortie de transformation rapide de Fourier, la sortie de transformation rapide de Fourier étant obtenue un moyen de transformation rapide de Fourier qui réalise la transformation rapide de Fourier sur un échantillon de données par unité de symbole, l'échantillon de données étant obtenu en échantillonnant un signal analogique de réception ;
un détecteur de quantité maximum (107) qui détecte une quantité d'énergie maximum parmi le sortie de transformation rapide de Fourier stockée dans ledit tampon ;
un contrôleur principal (104) qui augmente les quantités d'énergie de toutes les porteuses dudit signal de réception analogique lorsque ladite quantité d'énergie maximum détectée par ledit détecteur de quantité maximum (107) est inférieure à une quantité cible, et diminue les quantités d'énergie de toutes les porteuses dudit signal analogique de réception lorsque ladite quantité d'énergie maximum détectée par ledit détecteur de quantité maximum (107) est supérieur à ladite quantité cible.

7. Procédé de commande de communication qui réalise une communication en utilisant une pluralité de porteuses qui constituent un signal analogique de réception, chaque porteuse ayant respectivement une fréquence différente, le procédé de commande de communication comprenant :
la réalisation d'une commande de gain sur le signal analogique de réception ;
l'échantillonnage d'un signal analogique de réception depuis une ligne téléphonique pour sortir des échantillons de données ;
**caractérisé en ce que**
la réalisation d'un processus de transformation rapide de Fourier sur ledit échantillon de données par unité de symbole, pour obtenir une sortie qui indique la quantité d'énergie de chaque porteuse en analysant les parties réelles et imaginaires du signal de transformation rapide de Fourier ;
la détection d'une quantité d'énergie maximum parmi :laite sortie ;
la commande d'augmentation des quantités d'énergie de toutes les porteuses dudit signal analogique de réception lorsque ladite quantité d'énergie maximum détectée par ledit détecteur de quantité maximum est inférieure à une quantité cible, et commander la diminution desdites quantités d'énergie de toutes les porteuses dudit signal analogique de réception lorsque ladite quantité d'énergie maximum est supérieur à ladite quantité cible.
